(19) Europäisches Patentamt
European Patent Office
Office européen des brevets

(11) EP 2 770 347 A2

(12) EUROPEAN PATENT APPLICATION

(43) Date of publication:
27.08.2014 Bulletin 2014/35

(51) Int Cl.:
G01V 1/40 (2006.01)    E21B 47/10 (2012.01)

(21) Application number: 14000896.2

(22) Date of filing: 24.06.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR

(62) Document number(s) of the earlier application(s) in
accordance with Art. 76 EPC:
09846591.7 / 2 446 115

(71) Applicant: Bergen Technology Center AS
5160 Laksevag (NO)

(72) Inventor: Lie, Terje Lennart
5264 Garnes (NO)

(74) Representative: Fluge, Per Roald
c/o Fluges patent as
Postboks 27
1629 Gamle Fredrikstad (NO)

Remarks:
This application was filed on 12-03-2014 as a
divisional application to the application mentioned
under INID code 62.

(54) **Transducer assembly**

(57) The invention is a petroleum production well ul-
trasound logging tool comprising a cylindrical main body
(1010) having a lower end holding a sideways monitoring
transducer assembly (1000) comprising a ring-shaped
ultrasound transducer array (320) of transducer ele-
ments (1058), said transducer array (320) having a down-
ward tapering frustoconical shape ,
- said ultrasound transducer array's (320) radially out-
ward face covered by a funnel shaped acoustic window
(1045) with a radially inward facing surface (1048) corresponding to said outward face,
- said ultrasound transducer array (320) and said acoustic window retained on said cylindrical main body's (1010)
lower end by and end cap (1020).

FIG. 9

## Description

### Field of the invention

The present invention relates to transducer assemblies for use in monitoring systems, for example the invention is concerned with ultrasonic transducer assemblies for monitoring in boreholes in connection with oil and/or gas exploration and/or extraction. Moreover, the present invention is also concerned with methods of monitoring boreholes using such transducer assemblies in connection with oil and/or gas exploration and/or extraction. Furthermore, the present invention also relates to software products for use in implementing these aforesaid methods.

### Background of the invention

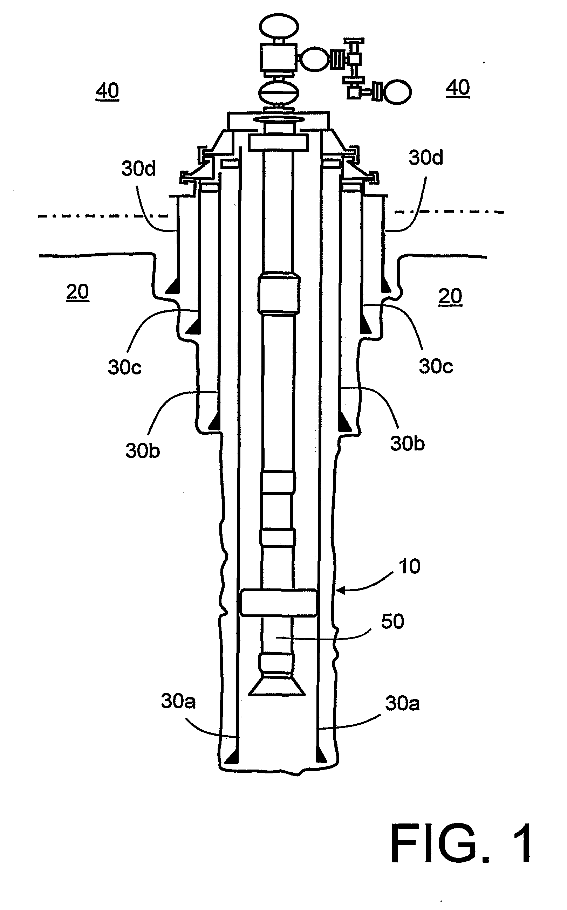

Referring to Figure 1, a borehole indicated generally by 10 is formed in a region of ground 20 during gas and/or oil exploration. In an event that deposits of oil and/or gas are found substantially at an end of the borehole 10, the borehole 10 provides a route by which the oil and/or gas deposits are subsequently extracted. The borehole 10 is often several kilometres in length and filled with liquid, for example:

> (a) with drilling mud when executing boring operations during oil and/or gas exploration; and
> (b) with a multiphase mixture of oil, water and sand particles during subsequent oil extraction, namely during production.

In such circumstances, a relatively elevated pressure is often encountered at the end of the borehole 10, for example in an order approaching 1000 Bar. Moreover, on account of geothermal heating in lower strata of the region of ground 20, an ambient temperature within the borehole 10 is susceptible to approaching 150 °C for more. Furthermore, the region of ground 20 is potentially porous and susceptible to fragmenting into quantities of gravel and similar types of sand particles.

In order to successfully drill the borehole 10, it is conventional practice to line the borehole 10 along at least part of its depth with one or more liner tubes 30a, 30b, 30c, 30d; such liner tubes are also often referred to as being "casings". The liner tubes 30a to 30d are operable, for example, to prevent water and other contaminants penetrating into the borehole 10 at upper regions of the ground 20. For reasons of economy, the borehole 10 is drilled to have a diameter sufficient for accommodating drilling and/or extraction apparatus 50 as well as providing for gas and/or oil extraction; the borehole 10 is not made to be unnecessarily large because drilling time to form the borehole 10 and associated costs would thereby be unnecessarily increased. In practice, the liner tube 30a is conveniently in a range of 150 mm to 500 mm in diameter, more conveniently in an order of 200 mm in diameter.

Many practical problems are often encountered when drilling the borehole 10; moreover, subsequent problems can arise when extracting oil and/or gas via the borehole 10. An example of such problems is that the liner tube 30a develops one or more leakage holes, and/or one or more obstructions. The one or more leakage holes are susceptible to enabling water and sand present in the region of ground 20 to penetrate into a central region of the liner tube 30a; such ingress of sand is susceptible to rendering oil production more costly on account of a need to subsequently remove such sand contamination from extracted oil. Moreover, the liner tube 30a itself is potentially susceptible to becoming obstructed with deposits transported up the liner tube 30a, for example sand/oil/tar deposits. When aforementioned one or more leakage holes and/or obstructions occur many kilometres underground, it is often very difficult to know at an above-ground region 40 what precisely is happening in the ground 20 in respect of the borehole 10. In view of the borehole 10 potentially costing many millions of dollars (US dollars) to drill and prepare for subsequent oil and/or gas extraction, reliable and efficient detection of defects arising in the borehole 10 is of considerable commercial importance. However, physical conditions within the borehole 10, for example in lower regions thereof, are very hostile on account of abrasive sand particles being present, on account of high ambient temperatures In an order of +150 °C or more pertaining, on account of high pressures approaching 1000 Bar pertaining and on account of corrosive and/or penetrative fluids, for example saline water, being present in the borehole 10.

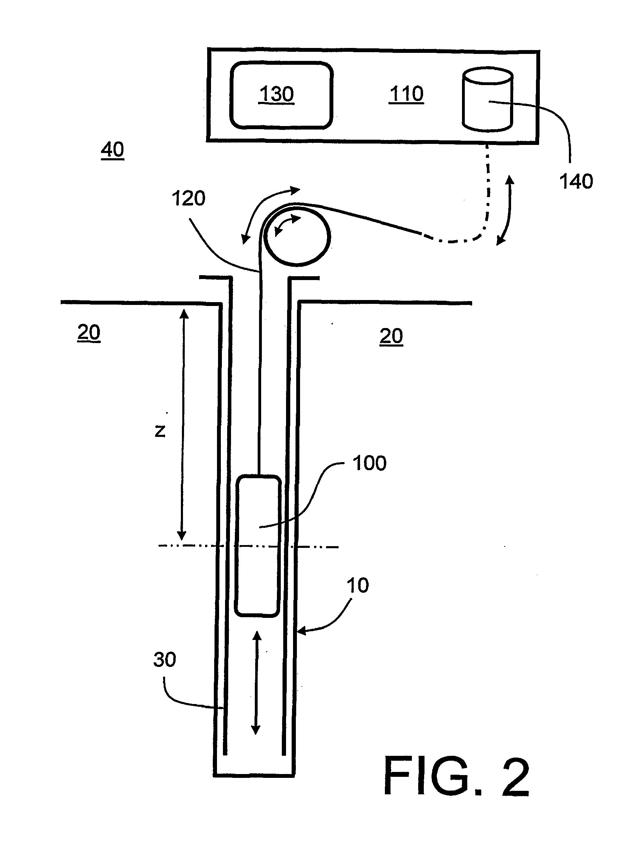

Various types of down-borehole tools are known, for example for measuring multiphase fluid composition within boreholes. Referring to Figure 2, certain implementations of these tools each comprise a probe assembly 100 operatively inserted into the borehole 10 to be monitored, a data processing arrangement 110 in the above-ground region 40, and a flexible communication link 120 mutually coupling together the data processing arrangement 110 and the probe assembly 100. In operation, the probe assembly 100 senses one or more parameters within the borehole 10, for example phase composition, temperature and/or pressure therein, using one or more sensors to generate one or more sensor signals which are then communicated via the communication link 120 to the data processing arrangement 110. At the data processing arrangement 110, the one or more sensor signals are at least one of: displayed on a display 130 in real-time, recorded in a data memory or data base 140 for subsequent analysis. Implementations of the tools, for example as illustrated in Figure 2, optionally enable real-time monitoring of boreholes to be achieved. A sliding fluid seal (not shown in Figure 2) is formed at the top of borehole **10** around a cable implementing the communication link **120** so as to seal the borehole **10** in an event that the borehole **10** is operating under excess pressure, for example as a result the borehole **10** intercepting a gas deposit in the ground **20**.

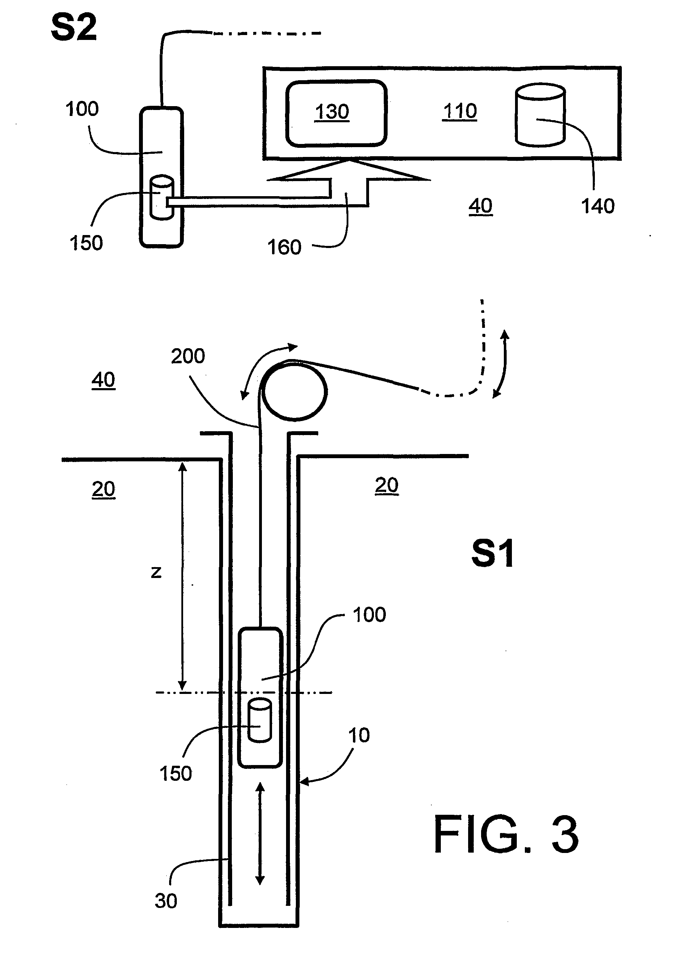

Alternatively, as illustrated in Figure 3, other implementations of these tools each comprise the probe assembly **100** which additionally includes a semiconductor data memory **150** locally therein for recording signals generated by one or more sensors of the probe assembly **100** in a first step S1 when the probe assembly **100** is employed to characterize the borehole **10**. In such an implementation, the probe assembly **100** is operable to function as an autonomous apparatus which is moved substantially blindly within a borehole **10** to collect data therefrom. In a step S2, the probe assembly **100** is then subsequently extracted from the borehole **10** to the above-ground region **40,** whereat the probe assembly **100** is coupled to its associated data processing arrangement **110** for downloading monitoring data thereto, as denoted by **160,** namely from the data memory **150** of the probe assembly **100** to the data processing arrangement **110**.

It is desirable to be able to spatially inspect, in real-time, an inside of the borehole **10** by using the probe assembly **100**. On detection of a defect such as a leakage hole or obstruction, it is desirable for the probe assembly **100** to be maintained in a locality of the defect for a longer period to sample an enhanced amount of data, thereby enabling the defect to be identified and characterized to a greater degree of certainty. Such operation requires that probe assembly **100** to be provided with robust and durable sensors which are operable to withstand hostile conditions present in the borehole **10** whilst simultaneously providing a relative high quality of spatial monitoring. By identifying and characterizing one or more defects and/or obstructions to a greater degree of certainty by such high quality monitoring, repair or mitigation of the one or more defects and/or obstructions are susceptible to being implemented in a more efficient and selective manner.

A technical problem which the present invention therefore addresses is providing transducer assemblies which are more appropriate to employ within boreholes when monitoring and characterising one or more defects and/or obstructions occurring within the boreholes.

**Summary of the invention**

An object of the present invention is to provide an improved transducer assembly which is operable to provide in-borehole sideways monitoring and/or down-borehole monitoring.

According to a first aspect of the invention, there is provided a transducer assembly as claimed in appended claim 1: there is provided a transducer assembly for monitoring within a borehole, the transducer assembly being operable to at least one of:

(a) generate acoustic radiation when excited with one or more signals; and
(b) generate one or more signals when acoustic radiation is received thereat;
wherein the transducer assembly includes one or more piezo-electric elements for converting between acoustic radiation and corresponding signals,
characterized in that
(c) the assembly includes an interfacing member for acoustically interfacing between the one or more piezo-electric elements and an environment of the borehole for protecting the one or more piezo-electric elements from the environment; and
(d) the assembly is adapted to at least one of generate acoustic radiation and sense acoustic radiation in a sideways or down-borehole direction.

The invention is of advantage in that transducer array is capable of providing more effective monitoring in sideways directions within a borehole and/or down the borehole.

Optionally, in the transducer assembly, the interfacing member is formed to have at least one of following profiles: an annular shell, an acoustic lens.

Optionally, the assembly includes an acoustic isolation feature to resist propagation of radiation therethrough. Such an isolation feature is beneficially in enabling the transducer assembly to provide more representative spatial images of a region within the borehole.

Optionally, the transducer assembly is adapted for use in a system for monitoring within a borehole, the system comprising a probe assembly operable to be moved within the borehole for sensing one or more physical parameters therein, a data processing arrangement being located outside the borehole, and a data communication arrangement operable to convey sensor data indicative of the one or more physical parameters from the probe assembly to the data processing arrangement for subsequent processing and display and/or recording in data memory, wherein

(a) the probe assembly includes one or more sensors including the transducer assembly for spatially monitoring within the borehole and generating corresponding sensor signals;

(b) the probe assembly includes a digital signal processor for executing preliminary processing of the sensor signals to generate corresponding intermediately processed signals for communication via the data communication arrangement to the data processing arrangement; and

(c) the data processing arrangement is operable to receive the intermediately processed signals and to perform further processing on the intermediately processed signals to generate output data for presentation and/or for recording in a data memory arrangement.

Optionally, when using the transducer assembly within the system, the system is operable to generate the output data for presentation in real-time when the probe assembly is moved within the borehole.

Optionally, when using the transducer assembly within the system, the system is operable in at least one of first and second modes, wherein:

(a) the first mode results in the system passively sensing noise sources present in the borehole generating radiation for sensing at the one or more sensors; and

(b) the second mode results in the system actively emitting radiation into the borehole and receiving at the one or more sensors corresponding reflected radiation from a region in and/or around the borehole for generating the sensor signals.

Optionally, the system is operable to be dynamically reconfigurable between the first and second modes when the probe assembly is being moved in operation within the borehole.

Optionally, when using the transducer assembly in the system, the system is operable to communicate data bi-directionally between the data processing arrangement and the probe assembly, wherein the digital signal processor of the probe assembly is operable to being reconfigured between a first function of general sensing around in a region of the borehole in a vicinity of the probe assembly, and a second function of specific sensing in a sub-region of the region of the borehole in a vicinity of the probe assembly.

Optionally, when using the transducer assembly within the system, the data communication link is implemented using one or more twisted-wire pairs including material insulation and copper electric conductors embedded within the material, the data communication link being clad by cladding susceptible to bearing a weight of the probe assembly when the assembly is moved in operation within the borehole. More optionally, the material insulation includes a plastics material insulation.

According to a second aspect of the invention, there is provided a method as claimed in appended claim 12: there is provided a method of sensing within a borehole in a sideways direction or a down-borehole direction using a transducer assembly pursuant to the first aspect of the invention, the method comprising steps of:

(a) applying one or more signals to one or more piezo-electric elements of the transducer assembly;

(b) exciting acoustic radiation at the transducer assembly for propagating within the borehole;

(c) receiving at the transducer array a portion of the radiation in step (b) which is reflected from one or more features associated with the borehole;

(d) transducing the portion of the radiation to generate corresponding one or more received signals; and

(e) processing the one or more received signals for subsequent presentation on a display and/or for storage in data memory.

According to a third aspect of the invention, there is provided a software product stored on a data processor, the product being executable on computing hardware for implementing a method pursuant to the second aspect of the invention.

According to a fourth aspect of the invention, there is provided a probe assembly for monitoring within a borehole, the probe assembly including a transducer assembly pursuant to the first aspect of the invention, the probe assembly including a digital signal processing arrangement within the probe for providing local intermediate processing of the one or more signals.

Features of the invention are susceptible to being combined in any combination without departing from the scope of the invention as defined by the appended claims.

**Description of the diagrams**

Embodiments of the present invention will now be described, by way of example only, with reference to the following diagrams wherein:

Figure 1    is an illustration of a borehole furnished with a liner tube arrangement, also known as a casing;

Figure 2    is a schematic illustration of a down-borehole probe arrangement for sensing physical parameters within a borehole and generating corresponding signals for communicating in real-time to a data processing arrangement remote from the borehole;

Figure 3    is a schematic illustration of a down-borehole probe arrangement for sensing physical parameters within a borehole and generating corresponding signals for data-logging locally within a probe assembly, for subsequent down-loading to a data processing arrangement when the probe assembly has been extracted from the borehole;

Figure 4    is a schematic illustration of a monitoring system for monitoring down boreholes, the system including an ultrasonic transducer assembly pursuant to the present invention;

Figure 5    is a more detailed illustration of component parts of the system in Figure 4, the components including an ultrasonic transducer assembly pursuant to the present invention for receiving ultrasonic radiation from boreholes, and optionally for also interrogating such boreholes;

Figure 6    is an illustration of polar sensing angles of the transducer array of Figure 5;

Figures 7a and 7b  are illustrations of signals present in the system of Figure 4 when in operation;

Figure 8    is a flow diagram of signal processing operations executed within the system of Figure 4;

Figure 9    is an illustration of a first transducer assembly pursuant to the present invention for use with the systems as illustrated in Figures 2 to 4;

Figure 10    is an external view of the first transducer assembly of Figure 9; and

Figure 11    is an illustration of a second transducer assembly pursuant to the present invention for use with the systems as illustrated in Figures 2 to 4.

## Description of embodiments of the invention

The present invention is concerned with transducer assemblies which are susceptible to being used in the systems illustrated in Figure 2 and 3. In overview, the systems illustrated in Figures 2 and 3 include:

(a) a probe assembly 100 for spatially sensing within a borehole 10;
(b) a communication arrangement, for example the data communication link **120** or the data memory **150,** for communicating elsewhere signals acquired by the probe assembly **100;** and
(c) a data processing arrangement **110** in communication via the aforesaid communication arrangement to the probe assembly **100.**

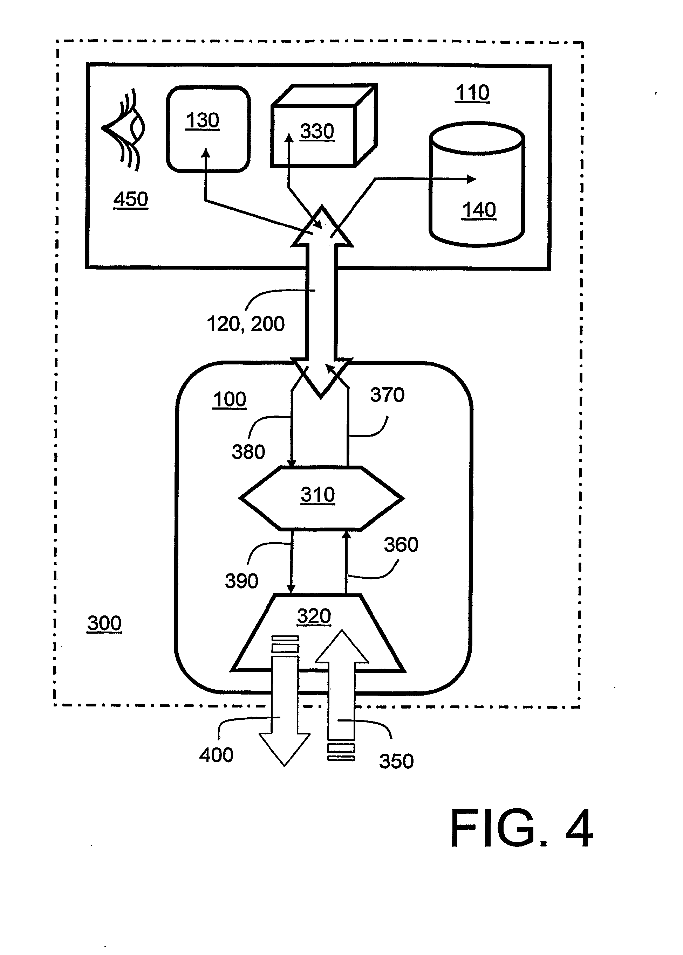

The probe assembly **100,** the communication arrangement implemented as the data communication link **120** and the data processing arrangement **110** constitute a system as denoted by **300** in Figure 4. The probe assembly **100** includes one or more transducer arrays **320** coupled via a digital signal processor (DSP) **310** and then via the communication link **120** to the data processing arrangement **110.** Moreover, the data processing arrangement **110** includes a data processor **330** which is operable to receive data from the probe assembly **100** via the communication link **120;** the data processor **330** is also operable to send control commands via the communication link **120** to reconfigure the digital signal processor (DSP) **330** in response to signals generated in operation by the one or more transducer arrays **320.**
The system **300** is optionally susceptible to operating in a first passive mode and in a second active mode.
In the first passive mode, physical signals **350** that are generated by ambient processes occurring in and around the borehole **10** propagate within the borehole **10** and are eventually received by the one or more transducer arrays **320.** The one or more transducer arrays **320** generate corresponding electrical signals **360** which are conveyed to the digital signal processor (DSP) **310.** Thereafter, the digital signal processor **310** performs primary processing of the electrical signals **360** to generate corresponding intermediate processed signals **370** which are communicated via the communication link **120** to the data processor **330** and/or stored in the memory **150.** The data processor **330** then performs secondary processing on the intermediate processed signals **370** to generate corresponding output data.

Moreover, the data processor **330** is optionally operable to store at least part of the intermediate processed signals **370** in the data memory **140**. Moreover, the data processor **330** is optionally operable to store at least part of the output data in the data memory **140**. Moreover, the data processor **330** is operable to present the output data on the display **130**.

In the second active mode, the data processor **330** is operable to send control signals **380** to the digital signal processor (DSP) **310** to drive at least one of the one or more transducer arrays **320** with one or more drive signals **390** to cause the at least one transducer array **320** to emit radiation **400** into the borehole **10**. Optionally, the emitted radiation **400** is pulsed radiation comprising pulses punctuated by quiet periods; portions of the radiation **400** reflected from structures within and in near proximity to the borehole **10** are received back at the one or more transducer array **320** as the physical signals **350** to generate the corresponding electrical signals **360** which are subsequently processed in the digital signal processor **310** to subsequently generate the intermediate processed signals **370**. The data processor **330** then performs secondary processing of the intermediate processed signals **370** to generate corresponding output data. Moreover, the data processor **330** is optionally operable to store at least part of the intermediate processed signals **370** in the data memory **140**. Moreover, the data processor **330** is optionally operable to store at least part of the output data in the data memory **140**. Moreover, the data processor **330** is operable to present the output data on the display **130**.

It will be appreciated from the foregoing that the system **300** is operable to distribute data processing activities between the digital signal processor **310** and the data processor **330**.

Such a distribution of data processing activities is of benefit in that data reduction within the probe assembly **100** is feasible to achieve so that available bandwidth of the communication link **120** is not occupied by data which bears relatively irrelevant information; in the system in Figure 2, such data reduction is beneficially also employed to reduce a quantity of data to be stored in the data memory **150**. By such data reduction in the system **300**, for example achieved by various data compression techniques which will be described in more detail later, it becomes feasible to provide real-time images of the borehole **10** on the display **130** at a sampling rate which is practical for the probe assembly **100** to be moved at an acceptably fast velocity up or down the borehole **10** for investigating defects and/or obstructions therein or in a vicinity thereof. When the borehole **10** is many kilometres in length, an inspection rate when using the system **300** beneficially corresponds to several metres per second along the borehole **10**.

The system **300** has been described in overview in the foregoing. However, before describing component parts of the system **300** in greater detail, other issues regarding the probe assembly **100** will next be elucidated. The borehole **10** is often at a pressure P which, in certain circumstances, can approach 1000 Bar. For example, the borehole **10** can often be many kilometres deep and filled with water, or with an abrasive multiphase mixture including oil, water and sand particles. When the probe assembly **100** is lowered into the borehole **10** filled with liquid to a depth of a kilometre or more, the pressure P acting upon the probe assembly **100** is potentially enormous. In such circumstances, a leakage hole in the liner tube **30a** with many Bar differential pressure between a first region outside the liner tube **30a** to a second region inside the liner tube **10** potentially results in a considerable flow of fluid between the first and second regions causing turbulent generation of acoustic radiation from a vicinity of the leakage hole. It is also feasible in certain situations that the borehole **10** is filled with gas at a high pressure approaching 1000 Bar on account of the borehole **10** intercepting a gas reservoir. Such high pressures in the borehole **10** risk forcing gas or liquid to ingress into an inside region of the probe assembly **100** and can also force gas into a polymeric material from which the cladding **200** is fabricated. For example, if the cladding fabricated from polymeric material is suddenly depressurized from a high pressure of 1000 Bar pressure to nominal atmospheric pressure of 1 Bar (760 mm Hg), gas forced by such a high pressure to earlier ingress into interstitial spaces within the polymeric material is susceptible to cause the polymeric material to expand to form a foam-like material with microvoids therein, potentially resulting in permanent damage to the polymeric material. Optionally, as illustrated in Figure 1, the inner liner tube **30a** includes a sliding seal around a top region thereof as illustrated in Figure 1 when the borehole **10** is required in operation to exhibit an elevated pressure relative to ambient atmospheric pressure of nominally substantially 1 Bar (760 mm Hg). Thus, the seal is beneficially adapted to be capable of sealing around the cladding **200** when the probe assembly **100** is deployed within the borehole 10. Although a use of a polymeric material to form the cladding **200** to clad the communication link **120** is virtually unavoidable, a casing of the probe assembly **100** is beneficially fabricated from a robust material which is resistant to abrasion and corrosion, for example fabricated from machined solid stainless steel material or seamless stainless steel tubing.

The one or more transducer arrays **320** are beneficially implemented as an array of one or more piezo-electric elements, for example fabricated from lead zirconate titanate (PZT) or similar strongly piezo-electric material. Optionally, the piezo-electric material is polarized during manufacture, for example by applying high potential pulses to electrodes formed on the piezo-electric material. In operation, the one or more transducer arrays **320** are susceptible to being excited by the one or more drive signals **390** applied thereto to generate the radiation **400** as ultrasonic radiation, and also susceptible to receive the radiation **350** as reflected ultrasonic radiation for generating aforesaid electrical signals **360**: Piezo-electric material of the one or more transducer arrays **320** is optionally directly in physical contact with fluid present within the borehole **10** in order to obtain most efficient coupling of ultrasonic radiation. Alternatively, the transducer **320** is operable to communicate with the interior region of the borehole **10** via one or more interfacing windows. As will be elucidated in greater detail later, the interfacing windows are beneficially specially profiled to form acoustic lenses, for example by molding or by precision machining processes. Ceramic materials such as alumina, silicon carbide, silicon nitride or zirconates can optionally be employed to form the one or more interfacing windows.

On account of the borehole **10** being potentially heated up to a temperature T approaching +150 °C by geothermal energy in rock formations surrounding the borehole **10,** there is a potentially severe limitation regarding power dissipation which can occur within the probe assembly 100 when in operation. When the probe assembly **100** is operating pursuant to the aforesaid second active mode, generating the one or more drive signals **390** in drive amplifiers is susceptible to resulting in electrical power dissipation within the probe assembly **100.** Moreover, data processing occurring in operation in the digital signal processor (DSP) **310** is susceptible to causing additional dissipation in both the first passive mode and in the second active mode.

Optionally, the digital signal processor (DSP) **310** is provided with a Peltier cooling element for optionally cooling the signal processor **310;** however, use of the Peltier cooling element is susceptible to adding to a total dissipation occurring within the probe assembly **100** and is therefore only employed selectively when effective cooling of the processor **310** is susceptible to being achieved. The digital signal processor (DSP) **310** is beneficially implemented using semiconductor devices based upon CMOS technology which are not vulnerable to thermal runaway as a result of increase in minority-carrier currents therein during operation. Similarly, the drive amplifiers employed within the probe assembly 100 to provide the one or more drive signals 390 are beneficially also based upon MOSFET devices which are capable of operating at elevated temperatures approaching +200 °C without suffering thermal runaway. The digital signal processor (DSP) **310** is beneficially implemented as a plurality of integrated circuits so that heat dissipation is spatially distributed over several integrated circuit devices rather than being concentrated in any one single integrated circuit device. Optionally, the digital signal processor (DSP) **310** is implemented as a single integrated circuit mounted on a low thermal-resistance mount, for example a copper or aluminium mount, having a thermal resistance of less than 0.5 °C/Watt, and more preferably less than 0.2 °C/Watt relative to a general ambient temperature within the probe assembly **100.**

On account of the liner tube **30a** having an inside diameter in an order of 200 mm, the probe assembly **100** is conveniently manufactured to have a diameter in a range of 100 mm to 180 mm, more preferably to have a diameter of substantially 150 mm. Moreover, the cladding **200** of the communication link **120** is optionally required to be strong enough to bear a weight of the probe assembly **100** when lowered kilometres down the borehole **10** including a weight of the cladding **200** itself; alternatively, or additionally, one or more mechanical supporting elements, for example one or more high-tensile steel ropes, are optionally employed to bear a weight of the probe assembly **100** when deployed in the borehole **10**. If the cladding **200** is relatively larger in diameter, for example 25 mm or greater in diameter, it becomes too massive and' is difficult to bend around pulleys of feed hoists above the borehole **10.** Conversely, if the cladding **200** is relatively small in diameter, for example 4 mm or smaller in diameter, the cladding **200** is susceptible to becoming snarled on projections forming in operation on an inside-facing surface of the borehole **10**, or on the liner tube 30a as appropriate, and is potentially unable to reliably bear its own weight and also the weight of the probe assembly **100.** In practice, with modem advanced cladding materials, for example by using one or more of carbon fibres, Kevlar and advanced nano-material fibres, it is feasible to provide sufficient robustness for the cladding **200** when the cladding has a diameter in a range 5 mm to 15 mm, more preferably in a range of 6 mm to 10 mm, and most preferably substantially 8 mm.

In operation, the cladding **200** is susceptible to exhibiting strain when a stress arising from weight is applied thereto. Optical fibres are not robust to stretching and can be fractured when undergoing even modest longitudinal strain. In consequence, the communication link **120** is conveniently implemented to include one or more electrical twisted pairs of wires. The wires each include plastics material insulation which is capable of stretching under stress. Moreover, each wire includes copper conductors therein; copper is a ductile metal of relatively low weight, of high electrical conductivity, of relatively high resistance to oxidative corrosion, and is less prone to work-hardening when subjected to repeated bending cycles in comparison to other metals. At each end of the communication link **120** are included Ethernet line drivers and receivers matched to a transmission-line impedance of the one or more twisted-wire pairs of the communication link **120;** data is thereby bi-directionally communicated in operation along the communication link **120** which is capable of enabling a data flow of several hundred kilobytes (kbytes) per second to be supported. It is however to be bourn in mind that conventional real-time streaming of two-dimensional video images often requires a communication bandwidth in the order of MHz.

The data processing arrangement **110** is implemented as a configuration of proprietary components and is susceptible to being installed on-land, on a sea-going vessel, in a submarine, on an oil exploration platform, or on an air-borne vehicle via an additional wireless link. The data processor **330** and the display **130** are beneficially implemented using proprietary computing hardware; the data processor **330** beneficially has a data entry device, for example a keyboard and a computer tracker-ball mouse, for enabling one or more users **450** to control operation of the system **300** in real-time. The data processor 330 is coupled in communication with the data memory **140** which is conveniently implemented by using at least one of: semiconductor memory, optical data memory, magnetic data memory.

Operation of the system **300** will now be described in greater detail.

During exploratory drilling activities for gas and/or oil, expensive and complex equipment is used under the supervision of experienced technical staff. In consequence, drilling and lining the borehole **10** with the liner tubes **30** is an extremely expensive activity, for example often costing in a region of a million United States dollars per day. When such high costs are encountered, problems occurring within the borehole **10** need to be identified quickly and resolved promptly. Even an operation of removing a drill bit and its associated string from the borehole **10** is a major undertaking, in some cases corresponding to several days of expensive work. When applied to monitor the borehole **10,** for example after removal of a drill bit and associated drive string therefrom, the system **300** needs to be highly reliable, susceptible to being rapidly deployed into the borehole **10,** and to provide flexibility in use by way of real-time monitoring to avoid a need to repeatedly reinsert the probe assembly **100** into the borehole **10,** for example in the liner tube 30a, when performing metrology thereon and monitoring thereof.

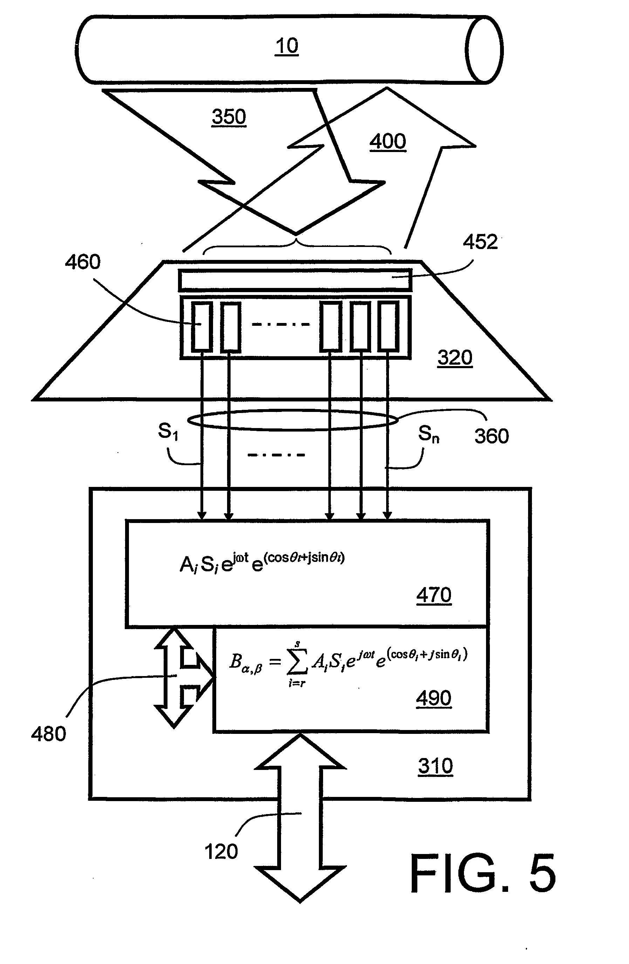

Referring to Figure 5, the probe assembly **100** includes one or more transducer arrays **320**. Each transducer array **320** comprises an assembly of one or more piezo-electric transducer elements **460** operable to at least receive ultrasonic radiation denoted by the radiation **350** from the borehole **10** and its environs; there are *n* transducer elements in the transducer array **320**. As elucidated in the foregoing, the radiation **350** is generated by one or more processes occurring in the borehole **10** when the system **300** is operating in the first passive mode, and is generated by reflection of the radiation **400** when the system **300** is operating in the aforesaid second active mode. As described earlier, the one or more transducer elements **460** optionally acoustically communicate via an interfacing member **452** which efficiently transmits acoustic radiation therethrough, for example ultrasonic radiation therethrough, as well as protects the transducer elements **460** from a harsh environment within the borehole **10**. The interfacing member **452** is optionally formed or machined to provide a lens-like action in operation for assisting in spatially defining the radiation **400** into a spatially well-defined beam. Similarly, the interfacing member **452** is similarly operable to help define a direction in which the one or more arrays **320** are preferentially sensitive in operation when receiving the radiation **350**.

The one or more transducer elements **460** in each of the one or more transducer arrays **320** are operable to generate signals $S_i\,e^{j\omega t}$ wherein *i is in a range of 1 to* n; the signals $S_i$ correspond to the electrical signals **360** described earlier. Beneficially, one or more of the transducer elements **460** are operable to emit and/or receive ultrasonic radiation having a frequency in a range of 500 kHz to 5 MHz when the system is operating pursuant to the second active mode. Conversely, one or more of the transducer elements **460** are operable to receive ultrasonic radiation having a frequency in a range of a few hundred Hz to several hundred kHz when the system **300** is functioning in the first passive mode, depending on which type of monitoring is to be performed within the borehole **10**; for example, sand particles impacting onto a housing of the probe assembly **100** when operating in the first mode result in acoustic signals being generated which are in a frequency range characteristic of impacting sand particles, namely considerably lower than a frequency of 500 kHz. The digital signal processor **310** is operable to condition one or more of the signals $S_i$, for example in a manner of a phased array algorithm to steer a direction of greatest sensitivity of the transducer array **320.** Such steering is achieved by performing two principal steps in the digital signal processor **310** as will now be described.

The first step of beam forming involves selectively phase shifting and scaling the signals $S_i$ under control of various control parameters. Moreover, the first step is performed in computing hardware of the digital signal processor **310** operable to execute a software product stored on a data carrier, for example the data carrier being a non-volatile semiconductor data memory associated with the digital signal processor **310**. Alternatively, or additionally, the software is dynamically downloaded to random-access-memory (RAM) associated with the digital signal processor **310** for enabling the digital signal processor **310** to be reconfigured when in operation within the borehole **10**. In the first step, the signals $S_i$ are subject to scaling and phase shifting operations as defined by Equation 1 (Eq. 1) to generate corresponding intermediate processed signal $H_i$:

$$H_i = A_i S_i e^{j\omega t} e^{\cos\theta_i + j\sin\theta_i} \qquad\qquad \text{Eq. 1}$$

wherein

$j$ =square root of -1;
$\omega$ =angular frequency of signal component of interest;
$t$ =time;
$\theta_i$ =phase shift applied for beam forming purposes;
$A_i$ =scaling coefficient for beam forming purposes.

Optionally, phase-shifting is achievable by using digital delay lines, beneficially implemented using data memory devices, for example as in clocked first-in first-out (FIFOs) registers.

The second step of beam forming is achieved by selectively summing one or more of the intermediate processed

signals $H_i$ as defined, by Equation 2 (Eq. 2) to generate corresponding signals $B_{\alpha,\beta}$ representative of a component of radiation received at the transducer array **320** from a specific direction as follows:

$$B_{\alpha,\beta} = \sum_{i=r}^{s} H_i \qquad \text{Eq. 2}$$

wherein

$\alpha, \beta$=angles define the specific direction, relative to an orientation of the transducer array **320,** in which the transducer array **320** is preferentially sensitive for generating the signal $B_{\alpha,\beta}$; and

$r$, s =index values defining which intermediate signal $H_i$ to be selectively summed to generate the signal $B_{\alpha,\beta}$

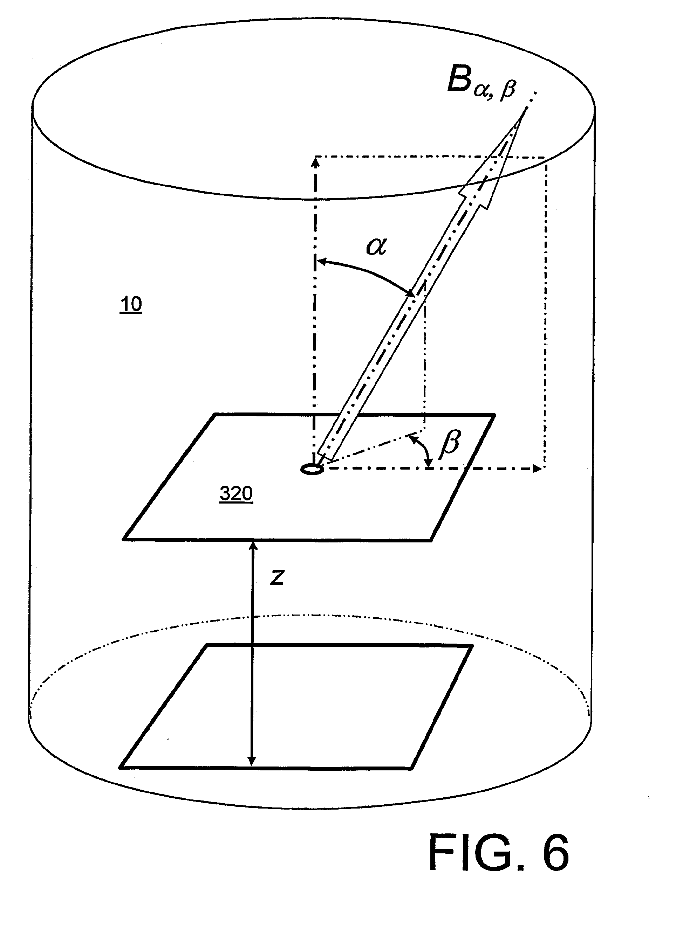

The signals $H_i$ to be summed optionally do not necessarily need to lie consecutively in series of index value $i$, for example appropriate scaled and phase-shifted signals $S_i$ for $i$ = 1, 10, 12, 15 can be selectively combined to generate the signal $B_{\alpha,\beta}$. The angles $a$ and $\beta$ are susceptible to being defined, for example, as illustrated in Figure 6. A mathematic mapping relates the angles $\alpha, \beta$ to corresponding phase shift $\theta_i$ and scaling coefficient $A_i$ are denoted by function G in Equation 3 (Eq. 3):

$$(\theta, A) = G(\alpha, \beta) \qquad \text{Eq. 3}$$

wherein the function G is determined by a geometry and configuration of the one or more transducer arrays **320** employed. The function G is optionally pre-computed and stored as a mapping in data memory, for example in a form of a look-up table; the look-up table is beneficially stored in at least one of the data processing arrangement **110** and the digital signal processor **310**. Alternatively, the function G can be computed in real-time from parameters in at least one of the data processing arrangement **110** and the digital signal processor **310.**

The signals $B_{\alpha,\beta}$ are computed using at least Equations 1 and 2 (Eqs. 1 and 2) in real-time and then communicated from the digital signal processor **310** via the communication link **120** to the data processor arrangement **110** for further processing there. Optionally, for example under control from the data processing arrangement **110** communicated via the communication link **120** to the probe assembly **100,** the signals $S_i$ are communicated directly in real-time, namely directly streamed, in a substantially unprocessed state via the communication link **120** to the data processing arrangement **110** and a majority of data processing then performed in the data processing arrangement **110.**

As elucidated in the foregoing, the system **300** is designed to economize on a way in which an available bandwidth of the communication link **120** is utilized in operation; in a similar manner, with reference to Figure 3, it is beneficial to utilize data storage capacity of the data memory **150** in a most efficient manner. Data flow reduction is susceptible to being achieved by one or more of following approaches:

(a) by dynamically instructing the probe assembly **100** only to send, alternatively record in the data memory **150,** the signals $S_i$ or the signals $B_{\alpha,\beta}$ corresponding to radially directions defined by $B_{\alpha,\beta}$ of special interest, thereby avoiding to process and send data for directions which are not of interest;

(b) by dynamically instructing the digital signal processor **310** only to process signals from a subset of the transducer elements **460,** corresponding to a reduction in angular and spatial resolution, for example by dynamically adjusting values for limit indexes $r$, s; this saves computing effort and power dissipation within the probe assembly **100;**

(c) by dynamically instructing the digital signal processor **310** to send, alternatively store in the data memory **150,** the signals corresponding to $B_{\alpha,\beta}$ or $S_i$ at a reduced resolution, for example by only sending more significant bits of data bytes whilst maintaining computational accuracy within the digital signal processor 310; and

(d) by performing a fast Fourier transform (FFT) at the digital signal processor 310 of the signal $B_{\alpha,\beta}$ to generate corresponding Fourier spectral coefficients $F_{\alpha,\beta}$ and then by communicating the spectral coefficients $F_{\alpha,\beta}$ via the communication link 120 to the data processing arrangement **110,** namely by adopting a parameterized data compression process.

Optionally, in approach (d), the digital signal processor **310** is operable to compare, for example by a correlation-type technique or by using a neural network approach, the Fourier spectral coefficients $F_{\alpha,\beta}$ with templates of frequency spectra of specific types of known defects and/or obstructions occurring within boreholes, for example leakage holes, oil/tar/sand clumps, cracks and so forth. In an event of the computer frequency spectrum $F_{\alpha,\beta}$ being sufficiently similar,

within a threshold limit, to one or more of the frequency spectra of the one or more templates, a defect and/or obstruction in the borehole **10** is deemed to have been found; in such case of finding a defect and/or obstruction for the angles $\alpha,\beta,$ the digital signal processor **310** is operable to simply send an identification that one or more defects and/or obstructions have been detected and a nature of the one or more detected defects and/or obstructions. Such an extension of the approach (d) represents considerable data processing in the probe assembly **100** but also provides a very high degree of data compression which potentially enables, for a given bandwidth available in the communication link **120** or data storage capacity in the data memory **150,** the probe assembly **100** to be advanced at a greater longitudinal velocity along the borehole **10** whilst providing monitoring. In an event that the borehole **10** is mostly free of defects and/or obstructions along its length, such an approach as in (d) results in a relatively smaller amount of data exchange along the communication link **120** until a defect and/or obstruction is found; in such an event that a defect and/or obstruction is found, the system 300 is, for example, capable of dynamically switching from the approach as in (d) to comprehensive sampling of the signal $B_{\alpha,\beta}$ when the probe assembly **100** is in close proximity to the detected defect and/or obstruction and whilst the probe assembly **100** is manoeuvred more slowly relative to the detected defect and/or obstruction.

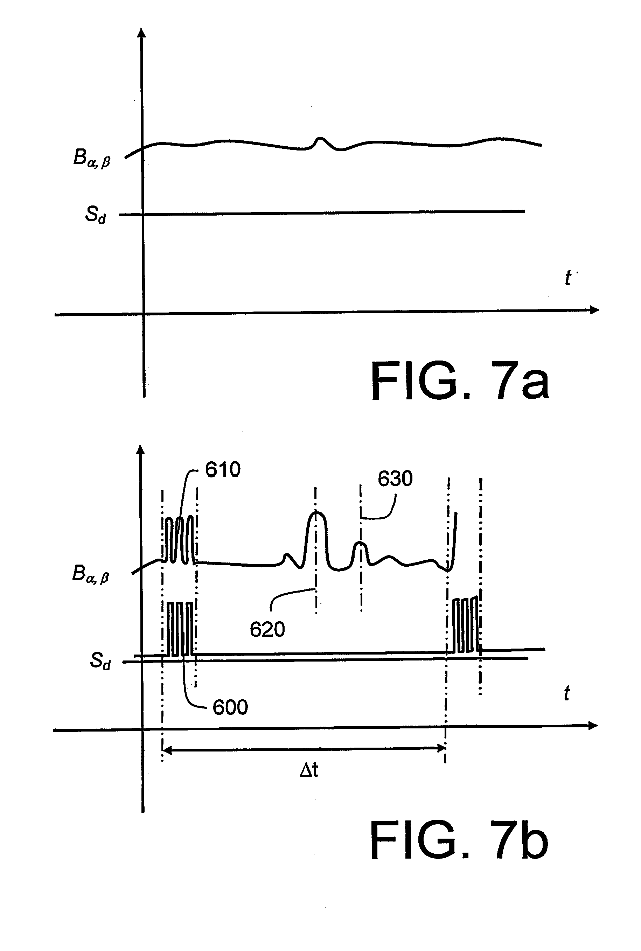

When the system **300** is operated in the first passive mode, a signal $B_{\alpha,\beta}$ as illustrated in Figure 7a is often obtained. In Figure 7a, there is an absence of any drive signal $S_d$ **390** applied to the one or more transducer arrays 320; such absence is denoted by a horizontal line in Figure 7a. Noise generated within the borehole 10 is received at the one or more transducer arrays 320 and gives rise, for example, to a resolved noise-like chaotic signal as illustrated in Figure 7a.

Conversely, when the system **300** is operated in the second active mode, at least one of the transducer arrays **320** is driven with the one or more drive signals $S_d$ **390** which are optionally phase shifted and amplitude adjusted so that the one or more transducer arrays **320** emit a beam of ultrasonic radiation in a preferred direction; such steering of the beam is potentially further enhanced when the aforementioned interfacing member **452** is included. Alternatively, the transducer array **320** is driven with the one or more signals $S_d$ 390 to emit ultrasonic radiation more omni-directionally from the one or more transducer arrays 320. The one or more drive signals $S_d$ **390** optionally include a temporal sequence of single excitation pulses mutually separated by a time duration $\Delta t$; such excitation single pulses approximate to pseudo-Dirac pulses and excite a natural mode of resonance of the transducer array **320** such that the radiation **400** is emitted at a frequency of this natural mode of resonance; such a natural frequency of resonance is potentially, for certain Eigenmodes of resonance of the one or more transducers **460,** in an order of 500 kHz to 5 MHz, more optionally substantially 3.5 MHz. Conversely, when the drive signal $S_d$ 390 is a periodically repeated sequence of a burst of pulses **600** as illustrated in Figure 7b, the frequency of the radiation **400** is susceptible to being at least partially defined by a pulse repetition frequency within the burst of pulses **600.**

When operating in the second active mode, the burst of pulses **600** results in instantaneous direct signal breakthrough coupling, for example by way of direct electrostatic and/or electromagnetic coupling, giving rise to an initial detected pulse **610** which, optionally, can be gated out using the digital signal processor **310**. A pulse wavefront in the radiation **400** propagates from the transducer array **320** to an inside facing surface of the liner tube **30a** wherefrom a portion of the radiation **400** is reflected and propagates as a component of the radiation **350** back to the transducer array **320** to give rise to a reflected pulse **620** as shown in Figure 7b in the resolved signal $B_{\alpha,\beta}$. A proportion of the radiation **400** is further coupled into the liner tube **30a** and is reflected from an exterior facing surface of the liner tube **30a** back through the liner tube **30a** and further as another component of the radiation **350** back to the transducer array **320** to give rise after resolving to a weaker pulse **630** as shown in Figure 7b in the resolved signal $B_{\alpha,\beta}$. In an event that an obstruction is present on an inside surface of the liner tube 30a, a pulse corresponding to the obstruction will be observed before the pulse 620. Moreover, in an event that the liner tube **30a** is cracked or fractured, reflections forming the pulses **620, 630** will be confused, namely a convoluted and attenuated mixture of reflected radiation components.

In the first passive mode of operation of the system **300,** spectral analysis, for example executed using a form of fast Fourier transform, of acoustic radiation generated by fluid flow through leakage holes and around an exterior of the liner tube **30a** enables certain categories of defects to be detected. Conversely, when fluid flow is not occurring within the borehole **10,** the second active mode of operation enables other types of defects to be identified. As elucidated in the foregoing, the system 300 is capable of being optimized for operating solely in either the first passive mode or solely in the second active mode. Alternatively, the system **300** is capable of being implemented to be able to function in both the first passive mode and the second active mode; for example, the system 300 is capable of being implemented to dynamically switch between the first and second modes in real-time when making measurements within the borehole **10.**

Optionally, in order to reduce a quantity of data to be communicated via the communication link **120** when the system **300** is operating in the second active mode, the digital signal processor **310** is optionally configurable from the data processing arrangement **110** to analyze the signal $B_{\alpha,\beta}$ to identify times tp when reflection pulses, for example the pulse **620, 630,** occur after their corresponding excitation burst of pulses 600 or single excitation pulse, and to determine their corresponding amplitudes U, and then communicate time of reflected pulse information $t_n$ and corresponding amplitude U as descriptive parameters via the communication link **120** to the data processing arrangement **110,** thereby achieving potentially considerable data compression in comparison to communicating the signal $B_{\alpha,\beta}$ directly to the data processing arrangement **110;** a rate at which the probe assembly **100** is capable of being advanced along the borehole **10** is thereby potentially considerably enhanced in real-time when data compression is utilized. As an alternative to communicating via the communication link **120,** such parametric data is susceptible to being stored in the data memory **150** in Figure 3 for subsequent downloading to the data processing arrangement **110** for data analysis to be performed at a later instance.

Operation of the data processing arrangement **110** will now be further elucidated. When data is communicated from the probe assembly **100** via the communication link **120** to the data processing arrangement **110,** the processing arrangement **110** is optionally operable to record the received data from the probe assembly **100** as a data log in the data memory **140.** Such a record enables, for example, subsequent analysis to be performed after the probe assembly **100** has been extracted from the borehole **10,** for example to perform noise reduction operations for increasing a certainty of detection of various types of defects in the borehole **10.** The data processor **330** is operable to execute one or more software products which apply further analysis and conditioning of data received via the communication link **120** from the probe assembly **100.**

In real-time, when the system 300 is functioning in the second mode of operation, the data processor **330** presents, for example, on the two-dimensional display **130** a local perspective 3-dimensional representation of an interior of the borehole **10** substantially at a depth z at which the probe assembly **100** is positioned within the borehole **10,** for example referring to Figures 2, 3 and 6 for a definition of the depth z; in Figure 6, increasing depth z is in an upward direction in the drawing. Such representation on the display 130 in the second active mode of operation enables the one or more users **450** to visually spatially inspect the inside surface of the liner tube **30a** in real-time. Time instances of receipt, for example, of the reflected pulses **620, 630** at the one or more transducer arrays **320** provides an indication of the spatial location of the inside and outside surfaces of the liner tube **30a** and also potentially an ultrasonic radiation view of material surrounding an exterior of the liner tube **30a.**

Alternatively, in the first passive mode of operation of the system **300,** there is provided presented on the display **130** an indication of potential defects or ultrasonic noise sources as a function of the depth z and the angles $\alpha, \beta$, see Figure 6. A different type of presentation is then optionally provided on the display **130** illustrating identified defect and/or noise type as a function of radial position as defined by the angles $\alpha, \beta$, and the depth z.

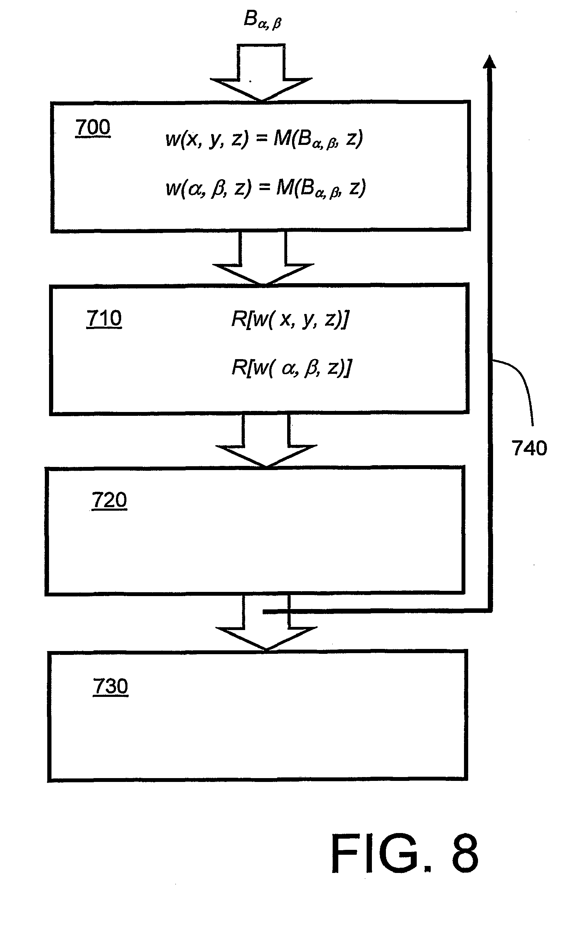

When the system **300** is configured to function in the second active mode, the data processor **330** employs one or more software products which operate to map the signal $B_{\alpha,\beta}$ by a mapping function $M$ to a Cartesian or a polar coordinate data array, namely w (x, y, z) or $w (\alpha, \beta, z)$, as denoted as a mapping step **700** in Figure 8 and described by Equation 4 (Eq. 4):

$$w\ (x,\ y,\ z) = M\ (B_{\alpha,\beta},\ z)$$

$$w\ (\alpha,\ \beta,\ z) = M\ (B_{\alpha,\beta},\ z) \qquad\qquad \text{Eq. 4}$$

Values stored in elements w of the data array correspond to strength of reflected ultrasonic radiation, namely aforementioned magnitude U, as determined from reflection pulse peak amplitude in the signal $B_{\alpha,\beta}$.

The signal $B_{\alpha,\beta}$, for example as illustrated in Figure 7b, is optionally communicated to the data processing arrangement **110** In data-compressed in a parameterized form as elucidated earlier. By action of the mapping function $M,$ the data array w thereby has stored therein a spatial crude 3-dimensional image of an inside view of the borehole **10** wherein an array element w position is equivalent to a corresponding spatial position within the borehole **10.**

Thereafter, in a gradient computation step 710, the data processor 330 is operable to apply a gradient-determining function to determine 3-dimensional gradients in element w signal amplitude values stored in the data array w (x, y, z) or w ($\alpha, \beta$, z), namely to determine whereat spatial boundaries between features are present in the ultrasonic image of the borehole 10 recorded in the data array w. Identification of spatial boundaries is also known as "iso-surface extraction" in the technical art of image processing and involves computation of partial differentials of the array elements w as provided in Equation 5 (Eq. 5):

$$\frac{\partial w}{\partial x}, \frac{\partial w}{\partial y}, \frac{\partial w}{\partial z} \quad \text{or} \quad \frac{\partial w}{\partial \alpha}, \frac{\partial w}{\partial \beta}, \frac{\partial w}{\partial z} \qquad\qquad \text{Eq.5}$$

depending upon whether Cartesian or polar coordinate systems are employed.

In a step 720, the one or more software products are then operable to enhance values in the data array *w*, for example by curve fitting techniques, to show more dearly whereat continuous boundaries occur in the elements *w (x, y, z)* or *w (α, β, z)* stored image data store in the data memory of the data processor **330**. Such curve fitting operations offer a smoothing function so that images presented on the display **130** are not cluttered with irrelevant surface texture details, but nevertheless show relevant features regarding integrity and operation of the borehole **10**. Optionally, a step of smoothing is alternatively performed before a step of extracting iso-surfaces is performed.

Thereafter, in a step **730,** the data processor **330** is operable to read data from the element w of the data array and then write corresponding presentation values, after geometrical transformation when necessary, into a memory buffer serving the display **130.**

Optionally, in an event that the one or more software products executing on the data processor **330** identify when extrapolating one or more boundaries in the image stored in the elements w of the data memory to be unclear, the data processor **330** is then operable in real-time to instruct, as denoted by **740,** the digital signal processor **310** for specific values of the angles $\alpha, \beta$ to repeat measurements within the borehole **10** for resolving such lack of clarity in the image stored at the data processor **330.** Such instruction to the digital signal processor **310** optionally includes one or more of:

(a) causing the probe assembly **100** to employ its digital signal processor **310** to appropriately phase shift and scale pursuant to Equations 1 and 2 (Eqs. 1 and 2) more of its electrical signals $S_i$ to generate corresponding values of the signal $B_{\alpha,\beta}$ thereby having greater directional definition and resolution, the signals $B_{\alpha,\beta}$ being subsequently communicated to the data processing arrangement **110** for further data processing and subsequent presentation on the display **130;**

(b) averaging, namely filtering, over numerous samples of the signal $S_i$ to reduce noise for a limited range of specified angular sensing directions defined by the angles $\alpha, \beta$, and then computing corresponding signals $B_{\alpha, \beta}$ for communicating via the communication link **120** to the data processing arrangement **110** for subsequent further data processing thereat and thereafter presentation on the display **130;**

(c) driving the transducer array **320** in the manner of a phased array so that more of its ultrasonic radiation **400** is delivered into a particular direction in which metrology and monitoring was previously unclear, acquiring further vales of the signal $S_i$ and subsequently computing corresponding signals $B_{\alpha, \beta}$ for communication to the data processing arrangement **110** for further data processing at the data processing arrangement **110** and thereafter presentation on the display **130;** and

(d) acquiring a larger set of measurements over a given defined limited range of angles $\alpha, \beta$ so as to map out finer details of a feature present in the borehole **10,** processing corresponding acquired signals $S_i$ to generate corresponding signals $B_{\alpha, \beta}$, communicating the signals $B_{\alpha, \beta}$ via the communication link **120** to the data processing arrangement **110** for further data processing and eventual presentation on the display **130.**

Beneficially, one or more of the users **450** as well as the data processing steps as illustrated in Figure 8 are able to invoke a reconfiguration of the probe assembly **100** to acquire enhanced information from one or more regions of the borehole **10**. After the enhanced information is acquired by the system **300,** the system **300** is beneficially operable to revert back to its previous configuration state to continue monitoring the borehole **10**. Thus, during monitoring operations involving manoeuvring the probe assembly **100** of the system **300** along the borehole **10,** the system **300** is optionally set to perform a method comprising steps of:

(a) performing a series of spatially coarse measurements along the borehole **10** whilst monitoring in real-time for any trace of one or more defects or other unusual features in the borehole 10;

(b) detecting one or more potential defects or other unusual features at a location along the borehole **10** in real-time;

(c) reconfiguring the probe assembly **100** to perform a selective more detailed series of measurements of the one or more defects or other unusual features; and

(d) after executing the more detailed series of measurements in step (c), resuming the series of spatially coarse measurements along the borehole **10** as in step (a).

This method is capable of being employed when the system **300** is operating in its first passive mode or in its second active mode. Optionally, the system **300** is beneficially operable to dynamically switch in real-time between the first and second modes when performing the series of spatially coarse measurements along the borehole **10.**

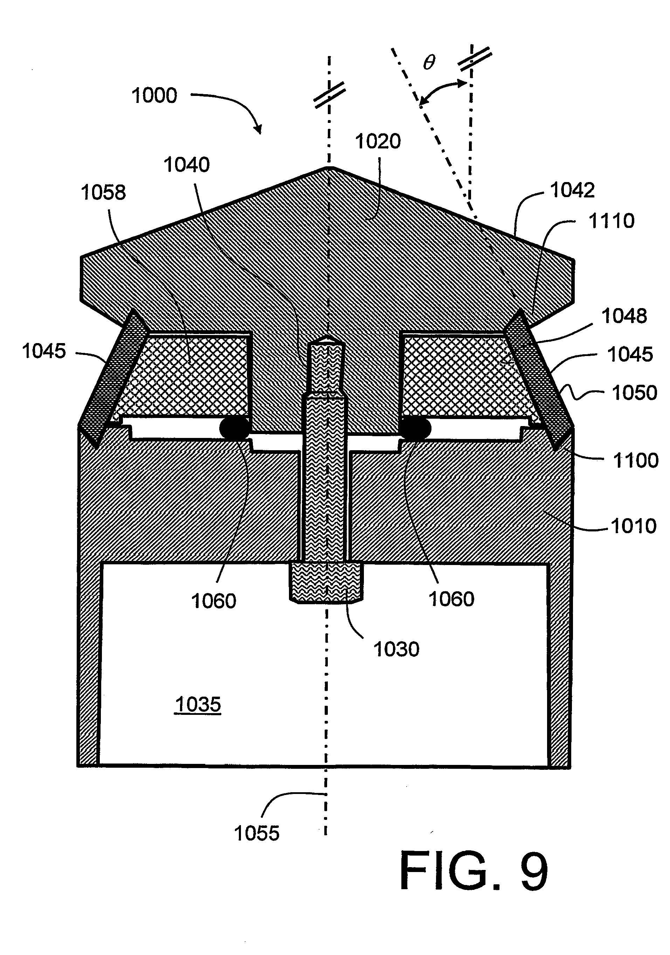

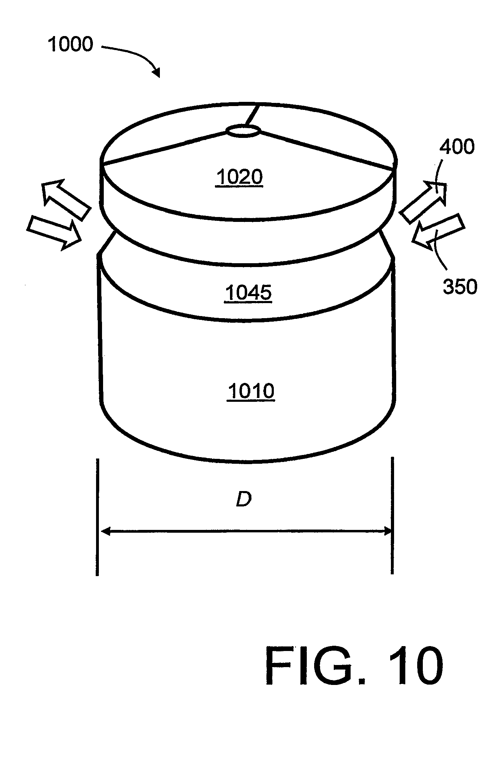

The one or more transducer arrays **320** are described briefly in the foregoing. These one or more arrays **320** will now be described in greater detail. When the probe assembly **100** is required to provide spatial monitoring within the borehole **10** using ultrasonic radiation, the probe assembly **100** is beneficially operable to assist with providing at least one of: sideways monitoring, downwards monitoring. Such sideways monitoring is beneficially provided using a frst sid6e-looking transducer assembly indicated generally by **1000** in Figure 9, and shown in external view in Figure 10; there is provided a cross-sectional view of the first transducer assembly **1000.** The first transducer assembly **1000** includes a circularly-symmetrical metallic body component 1010 and a circularly symmetrical metallic end cap **1020** retained in operation to the body component **1010** by a central threaded bolt **1030.** A head of the bolt **1030** is included within a cavity **1035** formed in the body component **1010;** a threaded portion of the bolt **1030** binds into a thread **1040** formed in the end cap **1020** to hold the body component **1010** and the end cap **1020** firmly attached together in operation. Moreover, the end cap 1020 has a conical external end surface **1042.**

the body component **1010** and the end cap 1020 are operable to retain between them an ultrasonic transmission window **1045,** and one or more piezo-electric elements **1058** claim 1 disposed in a ring formation behind the transmission window **1045** as illustrated. Material of the transmission window **1045** is formed as a frusto-conical component having radially parallel inside and outside surfaces **1048, 1050** respectively The body component **1010** and claim 5 the end cap **1020** include peripheral lips **1100, 1110** respectively for retaining the ultrasonic transmission window **1045** in position. The inner and outer surfaces **1048, 1050** subtend an angle $\theta$ in a range 10° to 35° relative to a central longitudinal central axis **1055** of the probe assembly **100;** more beneficially, the angle $\theta$ is in a range of 20° to 23°, and yet more beneficially substantially 23°. A flexible nitrile or similar robust material O-ring **1060** is included between the piezo-electric **elements 1058 and** an upper surface of the body component **1010** to provide a fluid seal for the bolt **1030.** Moreover, the piezo-electric elements **1058** are fabricated so that their peripheral outward-facing frusto-conical surfaces have a profile which matches that of the inside surface **1048** of the transmission window **1045.**

The first transducer assembly **1000** provides a benefit in operation that the end cap **1020** and the body component **1010** protect the transmission window 1045 from impact damage whilst providing the piezo-electric elements **1058** with an advantageous sideways view of the borehole **10** by way of transducing acoustic radiation. Moreover, the transmission window **1045** at least partially protects the piezo-electric elements from hydrolysis, corrosive chemicals and mechanical damage. Furthermore, inclusion of the bolt **1030** enables the transducer assembly **1000** to be dismantled for maintenance purposes, for example exchange of the piezo-electric elements **1058.** Additionally the end cap **1020** is also capable, if required, of functioning as a heat sink for dissipating energy occurring within the piezo-electric elements **1058** when excited to generate the radiation **400.** Beneficially, the cavity **1035** serves to ultrasonically isolate the transducer assembly **1000** from other regions of the probe assembly **100** so that spurious reflections are not reflected back to the first transducer assembly **1000** from these other regions of the probe assembly **100;** the cavity 1035 provides an abrupt acoustic radiation step which results in ultrasonic radiation generated by the transducer assembly **1000** being confined to the transducer assembly **1000** and an external region therearound in the bore hole **10** when in use. Beneficially, the piezo-electric elements **1058** are designed to operate in a frequency range of 500 kHz to 5 MHz, more optionally in a wide frequency band centred on a centre frequency of substantially 3.5 MHz

The end cap **1020** and the body component **1010** have an exterior diameter $D$ in a range of 50 mm to 100 mm, optionally in a range of 60 mm to 70 mm. Moreover, the end cap **1020** beneficially has a radial length in a range of 30 mm to 60mm, more optionally substantially 40 mm. Furthermore, the transmission window **1045** beneficially has a thickness between its inside and outside surfaces **1048, 1050** in a range of 1 mm to 5 mm, more beneficially in a thickness in a range of 2 mm to 3 mm. However, it will be appreciated that the first transducer assembly **1000** is susceptible to being manufactured in example dimensions described here for other application within borehole installations.

Whereas the first transducer assembly **1000** when employed as a part of the one or more transducer arrays **320** is highly effective for use in monitoring, for example, an inside surface of the liner tube **30a,** for example for holes or cracks therein, it is not suitable for performing spatial monitoring directly down the borehole **10,** for example for detecting an obstruction therein.

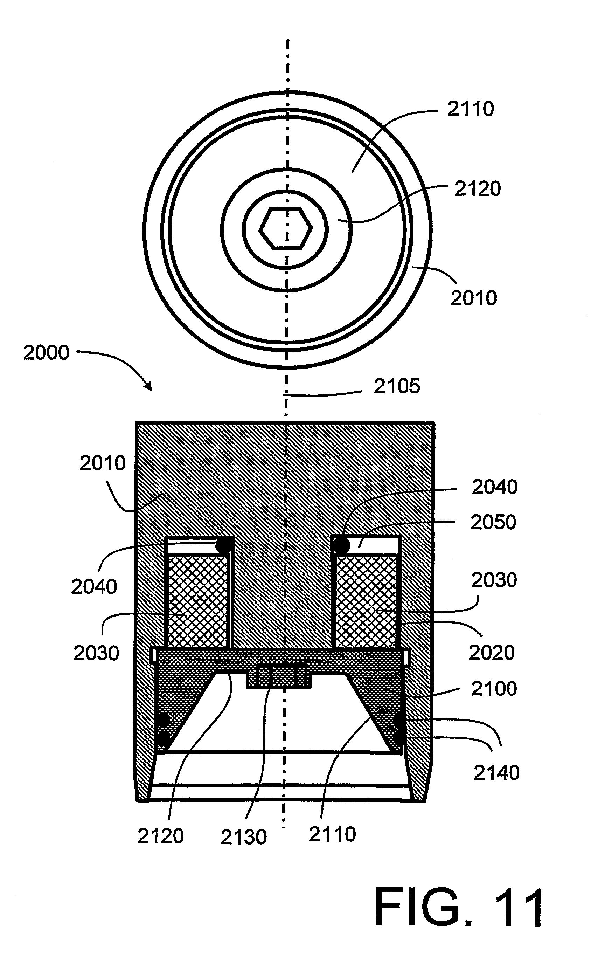

Referring to Figure 11, there is shown an alternative second transducer assembly indicated generally by **2000.** The second transducer assembly **2000** includes a body component **2010** including an annular recess **2020** to accommodate one or more piezo-electric elements **2030.** The recess **2020** includes a nitrile O-ring **2040** and a cavity **2050** constituting an abrupt acoustic impedance step to reduce coupling of ultrasonic radiation to other regions of the probe assembly **100.** The transducer assembly **2000** further includes an annular acoustic lens **2100** of a generally concave profile as illustrated, for example having an inwardly angled frusto-conical exterior surface **2110** as illustrated; the frusto-conical surface **2110** beneficially has an angle in a range of 20° to 45° relative to a central longitudinal axis **2105** of the transducer assembly **2000.** A central portion **2120** of the lens **2100** is provided with a generally flat profile and optionally provides for accommodating a bolt **2130** for retaining the lens **2100** firmly attached to the body component **2010** in use. A peripheral exterior surface of the lens **2100** is protected within the body component **2010** and includes nitrile sealing O-rings **2140** to resist fluids present in the borehole **10** penetrating to the piezo-electric elements **2030.**

In operation, the frusto-conical surface **2110** when excited by the piezo-electric elements **2030** results in certain portions of fluid immediately in front of the transducer assembly **2000** in operation being excited by way of acoustic radiation which propagates in a downwards direction near the central axis **2105.** By varying relative phase and amplitude of drive signals $S_d$ applied to the second transducer assembly **2000,** it is possible to steer a generally downwardly-projected beam of acoustic radiation for interrogating the borehole **10.** Moreover, it is similarly possible to steer by such selective phase shifting and amplitude scaling of the signals **360** generated by the second transducer assembly **2000** a direction in which the second transducer assembly **2000** is most sensitive to the received acoustic radiation **350.**

The transducer assmebly **2000** beneficially has an exterior diameter in a range of 40 mm to 80 mm, more beneficially substantially 60 mm. Moreover, the transducer assembly 2000 is susceptible to being fabricated in other dimensions. Electrical connections to piezo-electric elements **1058,** 2030 are provided but are not illustrated in Figures 9 and 11 for clarity.

The first and second transducer assemblies **1000, 2000** respectively are optionally susceptible to be combined together to provide a combination transducer array which is operable to monitor in a sideways direction in the borehole **10** as well as down the borehole; for example, the end cap **1020** of the first transducer assembly **1000** is modified to include the second transducer assembly **2000.**

The transducer assemblies **1000, 2000** are optionally provided in a range of 1 to 500 elements, and more beneficially in a range of 20 to 300 elements when employed for spatial monitoring of the borehole **10.**

In general, the probe assembly **100** beneficially has an exterior diameter "d" in a range of 50 mm to 180 mm, more beneficially a diameter in a range of 120 mm to 160 mm, and most beneficially substantially a diameter of substantially 150 mm. Moreover, the probe assembly 100 beneficially has a longitudinal length "L", disregarding attachment of the cladding 200 and its associated communication link **120,** in a range of 0.5 metres to 5 metres, more beneficially in a range of 1 metre to 3 metres and beneficially substantially 1.5 metres.

The system **300** is capable of being adapted to perform one or more of the following functions:

(a) Well leak detection, wherein the system **300** is operable to function as a Well Leak Detector (WLD). Leak depth accuracy to within an order of a centimetre (cm) is feasible. Moreover, leak rates in a range of 0.02 litres/minute to 300 litres/minute are susceptible to being detected and monitored by using the system **300;** leak detection in production packers, expansion joints, tubing, down-borehole **10** safety valves, one or more casings in a well associated with the borehole **10,** and in a wellhead associated with the borehole **10** are susceptible to being monitored using the system **300;** in operation, it is often not necessary when using the system **300** in the borehole 10 to pull drill-string tubing up for identifying and monitoring a failing barrier in a well;

(b) Well sand detection, wherein the system **300** is operable to function as a Well Sand Detector (WSD). Sand is probably a biggest challenge to operators in the oil industry. Sand fills up the borehole **10** and chokes back productivity of the borehole **10** when used for oil extraction. Sand erodes well equipment and facilities, causing breakdown and sometimes causing blowouts. The system **300** is susceptible to being used to identify sand-producing regions of geological strata, namely sand-producing intervals, and is also susceptible to being used to identify failures in sand control devices employed in conjunction with sand control for the borehole **10** when used to extract oil. Beneficially, the probe assembly **100** is implemented such that its housing has a relatively smaller diameter, for example in a range of 40 mm to 80 mm, when adapted specifically for well sand detection. Acoustic energy is generated in the housing when sand particles impact upon the casing when the probe assembly **100** is in use, wherein the acoustic energy has a characteristic frequency spectrum by which the sand can be identified; at least a portion of the transducer array **320** is then specifically adapted for sensing such acoustic radiation resulting from sand impact on the probe assembly **100;**

(c) Well flow detection, wherein the system **300** is operable to function as a Well Flow Detector (WFD); the system **300** configured to function as a well flow detector is susceptible in operation to providing detailed information about an inflow profile from the borehole **10** when used for oil extraction, for example for providing relative velocity profiles between different producing or injecting intervals of the borehole **10,** for example those intervals which are not contributing at all to oil extraction; and

(d) Well annular flow detection, wherein the system 300 is operable to function as a Well Annular Flow monitor (WAF); the system 300 operable as the Well Annular Flow monitor is capable of detecting and locating flow behind a pipe in an annulus between a liner tube, namely casing, and a geological formation; the system 300 is thereby operable to detect contamination of groundwater, one or more underground blowouts, sustaining liner tube pressure, one or more undesirable water cuts, and one or more undesirable gas cuts when drilling the borehole 10.

The system **300** is optionally optimized to perform one of functions (a) to (d). Alternatively, the system **300** can be optimally designed to perform several of these functions and to dynamically switch between such functions when in use. Certain of the functions (a) to (d) are serviced in the aforementioned first passive mode, whereas other of the functions (a) to (d) are addressed by the system 300 operating in its second active mode. In general, a cost and complexity of the system **300** increases as it is required to be more versatile in dynamically performing diverse functions.

It will be appreciated that embodiments of the invention as described in the foregoing are susceptible to being modified without departing from the scope of the invention as defined by the appended claims.

Beneficially, the probe assembly **100** is furnished with one or more pressure sensors for measuring a pressure *P* present within the borehole **10** as the probe assembly **100** is manoeuvred in operation along the borehole **10.** In an event that the probe assembly **100** detects that the pressure *P* in the borehole 10 becoming excessive, for example in excess of 500 Bar, the probe assembly **100** is operable to transmit a warning message to the one or more users **450**.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural.

Numerals included within parentheses in the accompanying claims are intended to assist understanding of the claims and should not be construed in any way to limit subject matter claimed by these claims.

**Claims**

1. A petroleum production well ultrasound logging tool comprising a cylindrical main body (1010) having a lower end holding a sideways monitoring transducer assembly (1000) comprising a ring-shaped ultrasound transducer array (320) of piezo-electric transducer elements (460, 1058), said transducer array (320) having a downward tapering frustoconical shape, p. 24, l. 13 - 16

   - said ultrasound transducer array's (320) radially outward face (1047) covered by a funnel shaped acoustic window (1045) with a radially inward facing surface (1048) corresponding to said outward face (1047),
   - said ultrasound transducer array (320) and said acoustic window retained on said cylindrical main body's (1010) lower end by and end cap (1020).

2. The petroleum production well ultrasound logging tool of claim 1, said end cap (1020) retained on a bolt (1030) extending from said main body (1010).

3. The petroleum production well ultrasound logging tool of claims 1 or 2, comprising a flexible ring (1060) arranged between said main body (1010) and said ultrasound transducer array (320).

4. The petroleum production ultrasound logging tool of any of the preceding claims, said funnel-shaped window (1045) having an outer surface (1050) which is parallel with said inner surface (1048).

5. The petroleum production ultrasound logging tool of any of the preceding claims, said main body (1010) and said end cap (1020) comprising peripheral lips (1100, 1110) respectively for retaining said ultrasonic window (1045) in position.

6. The petroleum production ultrasound logging tool of any of the preceding claims, said ultrasound window's inner and outer surfaces (1048, 1050) subtending an angle in the range 10 to 35 degrees relative to a central longitudinal axis (1055) of the tool.

7. The petroleum production ultrasound logging tool of any of the preceding claims, said ultrasound window's inner and outer surfaces (1048, 1050) subtending an angle in the range 20 to 23 degrees relative to a central longitudinal axis (1055) of the tool.

8. The petroleum production well ultrasound logging tool of any of the preceding claims, said ultrasound transducer array's (320) elements (1058) arranged for operating at a frequency of 500 kHz to 5 MHz, preferably 3.5 MHz.

9. The petroleum production well ultrasound logging tool of any of the preceding claims, the diameter of the main body being 50 mm to 100 mm, and the end cap and main body is slightly wider than the frustoconical-shaped transducer array.

10. The petroleum production well ultrasound logging tool of any of the preceding claims, the transmission window (1045) having a thickness between its inside and outside surfaces (1048, 1050) in a range of 1 mm to 5 mm.

11. The petroleum production well ultrasound logging tool of any of the preceding claims, two or more of said ultrasound transducer array's (320) elements (1058) arranged for transmitting as a phased array for beam-forming the transmitted ultrasound wave by selectively phase shifting and scaling the signals sent to the transducers.

12. The petroleum production well ultrasound logging tool of any of the preceding claims, receiving ultrasound energy at said transducer array's elements (1058) and beam-forming the received ultrasound signals to obtain a component of radiation received at the transducer array (320) from a specific direction.

13. The petroleum production well ultrasound logging tool of claim 12, the number (i) of consecutive transducer elements' (1058) signals in said beam-forming being at least 15 .

14. The petroleum production well ultrasound logging tool of any of the preceding claims,
beam forming the <u>transmitted</u> ultrasound signals in that said transducer elements (460, 1058) arranged for being excited by selectively phase shifted drive signals (Si, 360) to generate ultrasonic radiation (400) and for receiving ultrasonic radiation (350) and generating received electrical signals (360), and
beam forming the <u>received</u> ultrasound signals by selectively summing signals representing received signals received at the transducer array from a specific direction, by scaling and phase-shifting and combining a number (i) of at least 10 to 15 received signals to generate a received signal (B) .

15. The petroleum production well ultrasound logging tool of any of the preceding claims, said ultrasound transducer elements (460, 1058) arranged for emitting ultrasound signals (400) in the form of bursts of pulses (600) having a pulse repetition frequency.

16. The petroleum production well ultrasound logging tool of any of the preceding claims, arranged for receiving reflected pulses (620) from an inner face of a liner tube, and further for resolving ultrasound components (630) reflected from an exterior facing surface of a liner tube surrounding said transducer array.

17. The petroleum production well ultrasound logging tool of any of the preceding claims, further arranged for monitoring and locating flow in an annulus between a liner tube and a geological formation.

40                                                     40

30d                                                   30d

20                                                     20

30c                                                   30c

30b                                                   30b

10

50

30a                                                   30a

# FIG. 1

FIG. 2

FIG. 3

FIG. 4

10

350

400

460

452

320

$S_1$    $S_n$    360

$A_i S_i e^{j\omega t} e^{(\cos\theta_i + j\sin\theta_i)}$

470

$$B_{\alpha,\beta} = \sum_{i=r}^{s} A_i S_i e^{j\omega t} e^{(\cos\theta_i + j\sin\theta_i)}$$

490

480

310

120

FIG. 5

$B_{\alpha, \beta}$

$\alpha$

10

320

$\beta$

z

FIG. 6

FIG. 7a

FIG. 7b

$$B_{\alpha, \beta}$$

700     $w(x, y, z) = M(B_{\alpha, \beta}, z)$

$w(\alpha, \beta, z) = M(B_{\alpha, \beta}, z)$

710     $R[w(x, y, z)]$

$R[w(\alpha, \beta, z)]$

720

730

740

# FIG. 8

FIG. 9

FIG. 10

FIG. 11